# EUROPÄISCHE PATENTSCHRIFT

(11) **EP 0 515 009 B1**
(45) Veröffentlichungstag und Bekanntmachung des Hinweises auf die Patenterteilung: **14.12.1994**
(21) Anmeldenummer: 92250118.4
(22) Anmeldetag: 12.05.1992
(51) Int. Cl.: H01H 33/88, H02B 13/035

(54) **Mit Löschgas arbeitender Mehrstellungs-Drehschalter**
Multi-position rotary switch with extinguishing gas
Interrupteur rotatif multiposition avec gas d'extinction

(30) Priorität: 23.05.1991 DE 4117057
(43) Veröffentlichungstag der Anmeldung: 25.11.1992
(73) Patentinhaber: SIEMENS AKTIENGESELLSCHAFT, 80333 München (DE)
(72) Erfinder: Müller, Helmut, W-6072 Dreieich (DE)

(56) Entgegenhaltungen:
- EP-A- 0 199 044
- DE-A- 3 141 324
- DE-U- 8 125 211
- FR-A- 801 264
- SIEMENS POWER ENGINEERING Bd. 5, Nr. 3, Juni 1983, PASSAU REINHARD BUCHENAU:"NEW 8DJ10 MEDIUM-VOLTAGE LOAD-BREAK SWITCHGEAR FOR 6 TO 24 KV, MAINTENANCE-FREEAND CLIMATE-PROOF".

## Beschreibung

Die Erfindung betrifft einen Mehrstellungs-Drehschalter zum Betrieb mit einem von Luft verschiedenen Löschgas mit einem drehbar gelageten brückenartigen Kontaktarm und einem isolierenden Gehäuse zur Aufnahme des Kontaktarmes und mit kontaktgebenden Enden des Kontaktarmes zusammenwirkenden, entsprechend den vorgesehenen Schaltstellungen einander diametral gegenüberstehend angeordneten Paaren von feststehenden Kontaktstücken, sowie mit einem jedes der kontaktgebenden Enden des Kontaktarmes wenigstens seitlich abschirmenden Isolierkörper zur Erzeugung einer gegen einen beim Schalten auftretenden Schaltlichtbogen gerichteten Strömung des Löschgases.

Ein Mehrstellung-Drehschalter dieser Art ist beispielsweise durch die Firmendruckschrift Siemens "Die neue Generation von Mittelspannungs-Schaltanlagen", Best.-Nr. A19100-E139-A998, Juli 1984, bekannt geworden. In der dort beschriebenen Ausführung ist der Mehrstellungs-Drehschalter als Mittelspannungs-Lasttrennschalter mit den Schaltstellungen EIN, AUS und GEERDET zur Verwendung in Mittelspannungs-Schaltanlagen vorgesehen. Eine zur Unterbrechung von Lastströmen erforderliche Gasströmung wird bei diesem Drehschalter bei der Drehbewegung von der Einschaltstellung in die Ausschaltstellung dadurch bewirkt, daß der Isolierkörper als Drehflügel arbeitet und das Löschgas gegen den Schaltlichtbogen geblasen wird.

In Mittelspannungs-Schaltanlagen kann jedoch auch die Aufgabe auftreten, zwei Einschaltstellungen und eine Ausschaltstellung miteinander zu kombinieren. Ein solcher Umschalter eignet sich beispielsweise für den Einsatz in Netzen, bei denen eine Last wahlweise aus der einen oder der anderen Quelle gespeist werden soll. Für diese Schaltaufgabe ist ein Mehrstellungsschalter der vorstehend erwähnten Art zwar aufgrund seiner Kontaktanordnung geeignet, wäre jedoch nicht imstande, Lastströme sowohl der einen als auch der anderen Speiseleitung zu unterbrechen. Diese Eigenschaft des bekannten Drehschalters beruht darauf, daß die zur Löschung von Lastströmen benötigte Gasströmung nur in der einen Drehrichtung des Kontaktarmes entsprechend dem Übergang von der EIN- zur AUS-Stellung auftritt.

Um unter Verwendung der verfügbaren Drehschalter die erwähnte Schaltaufgabe, nämlich das Umschalten einer Last auf zwei verschiedene Speiseleitungen, lösen zu können, könnte man daran denken, zwei der bekannten Drehschalter in entsprechender Schaltung einzusetzen. Der Erfindung liegt hiervon ausgehend die Aufgabe zugrunde, für den Umschaltvorgang eine einfachere Lösung anzugeben.

Gemäß der Erfindung wird diese Aufgabe dadurch gelöst, daß Schrägflächen an den Enden des Isolierkörpers gegensinnig derart angeordnet sind, daß je nach der Drehrichtung des Kontaktarmes beim Schalten an dem einen oder an dem anderen kontaktgebenden Ende eine gegen den Schaltlichtbogen gerichtete Strömung des Löschgases entsteht. Somit nehmen je nach der Richtung des Schaltvorganges die kontaktgebenden Enden des Kontaktarmes abwechselnd die Aufgabe der Lastabschaltung oder der elektrischen Trennung war. Unabhängig von der Richtung des Schaltvorganges sind stets eine Lastschaltstelle und eine Trennstelle in Reihe geschaltet. Somit kann der bekannte Drehschalter mit einer leicht durchführbaren Modifizierung als Umschalter eingesetzt werden.

Ein Mehrstellungsschalter nach der Erfindung kann daher als Last-Umschalter mit einem Paar feststehender Kontaktstücke für die eine Schaltstellung und mit einem weiteren Paar von Kontaktstücken für die andere Schaltstellung versehen sein, wobei benachbarte feststehende Kontaktstücke zur Bildung eines gemeinsamen lastseitigen Anschlusses miteinander verbunden und die verbleibenden feststehenden Kontaktstücke je einer wahlweise zuschaltbaren speisenden Quelle zugeordnet sind.

Ferner empfiehlt es sich, den Drehschalter in einem ein Löschgas, insbesondere Schwefelhexafluorid, enthaltenden Gehäuse unterzubringen, das an gegenüberliegenden Seitenflächen Durchführungen zum Anschluß von zwei speisenden Leitungen und an seiner Unterseite weitere Durchführungen zum Anschluß einer lastseitigen abgehenden Leitung besitzt und daß eine Vorrichtung zur Anbringung an einem Freileitungsmast vorgesehen ist. Ein solches Schaltgerät ist in Freileitungsnetzen als Mastschalter verwendbar, wobei der lastseitige Anschluß vorzugsweise für einen Transformator vorgesehen ist.

Die Erfindung wird im folgenden anhand des in den Figuren dargestellten Ausführungsbeispieles näher erläutert.

Die Figuren 1, 2 und 3 zeigen einen als Umschalter ausgebildeten Mehrstellungs-Drehschalter im Querschnitt. Hierbei zeigt die Figur 1 eine der beiden Einschaltstellungen, die Figur 2 den Abschaltvorgang und die Figur 3 die Ausschaltstellung.

Die Figuren 4, 5 und 6 zeigen den Umschalter gemäß den Figuren 1, 2 und 3 ausgehend von der anderen der beiden Einschaltstellungen.

Die Figur 7 zeigt schematisch ein unter Verwendung des Umschalters gemäß den Figuren 1 bis 6 aufgebautes Schaltgerät, das als Mastschalter an einem Freileitungsmast angebracht ist.

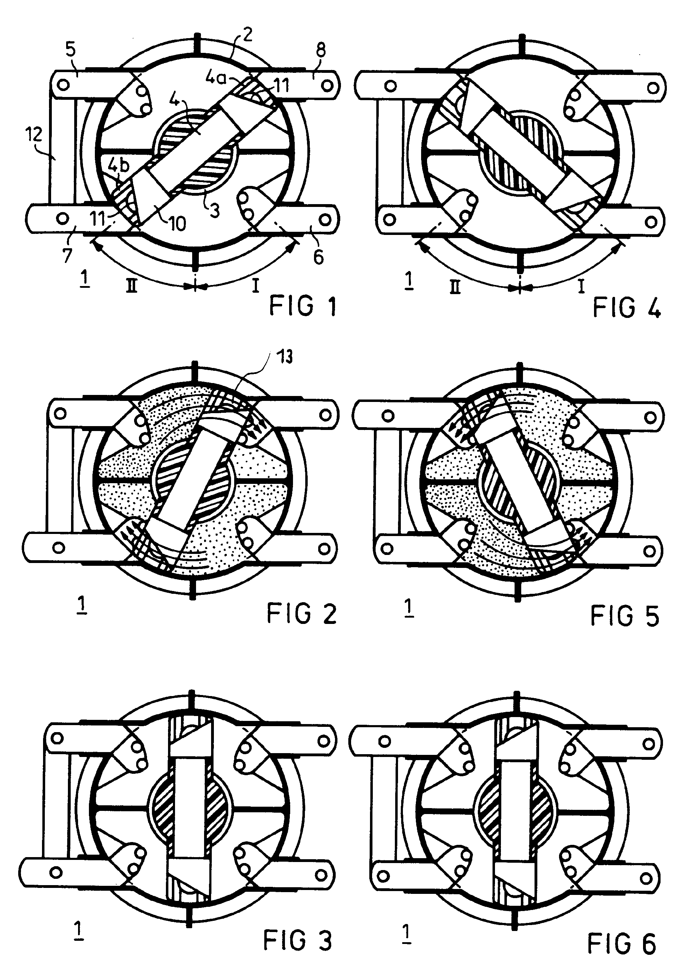

Der in der Figur 1 gezeigte Umschalter 1 besitzt ein aus Isolierstoff-Halbschalen zusammengesetztes Gehäuse 2, in dem eine gleichfalls aus isolierendem Kunststoff bestehende Schalterwelle 3 drehbar gelagert ist. Die Schalterwelle 3 dient zur Mitnahme brückenartiger Kontaktarme 4, die in bekannter Weise jeweils paarweise vorgesehen sein können und deren kontaktgebende Enden 4a und 4b mit ortsfesten, in dem Gehäuse 2 befestigten feststehenden Kontaktstücken 5, 6, 7 und 8 zusammenwirken. Die Kontaktarme 4 sind von einem Isolierkörper 10 umgeben, der nahe seinen Enden Schrägflächen 11 besitzt, die bis zur inneren Wandung des Gehäuses 2 reichen. Wie die Figur 1 ferner zeigt, sind die Schrägflächen 11 an beiden Enden des Isolierkörpers 10 gegensinnig angeordnet. Der Zweck dieser Gestaltung wird noch erläutert.

Die feststehenden Kontaktstücke 5 und 7 des Drehschalters 1 sind miteinander durch eine Schiene 12 verbunden. Diese Kontaktstücke bilden einen gemeinsamen lastseitigen Anschlußpunkt. Das dem feststehenden Kontakt 5 diametral gegenüberliegende Kontaktstück 6 ist einer ersten Speiseleitung zugeordnet, während das dem feststehenden Kontakt 7 gegenüberliegende Kontaktstück 8 für den Anschluß einer zweiten Speiseleitung vorgesehen ist. In der Figur 1 ist somit eine Schaltstellung gezeigt, in welcher die zweite Speiseleitung wirksam ist. Wird ausgehend hiervon der Kontaktarm 4 entgegen dem Uhrzeigersinn gedreht, so wird die zweite Speiseleitung abgeschaltet. Die Schrägflächen 11 des Isolierkörpers 10 bewirken dabei eine Strömung des Löschgases entsprechend den in der Figur 2 eingezeichneten Pfeilen 13 derart, daß das obere kontaktgebende Ende 4a des Kontaktarmes 4 als Lastschaltstelle arbeitet. An dem gegenüberliegenden kontaktgebenden Ende 4b des Kontaktarmes 4 tritt wegen der entgegengerichteten Lage der Schrägfläche 11 keine spezifische Löschgasströmung auf. Es zeigt sich jedoch, daß die Reihenschaltung der mit einer erhöhten Löschwirkung ausgestatteten Kontaktstelle 4a, 8 mit einer keine ausgeprägte Löschwirkung aufweisenden Trennstelle 4b, 7 in der Lage ist, den Anforderungen an einen Lasttrennschalter zu genügen. In der Mittelstellung des Kontaktarmes 4 gemäß der Figur 3 ist somit der Schaltvorgang beendet.

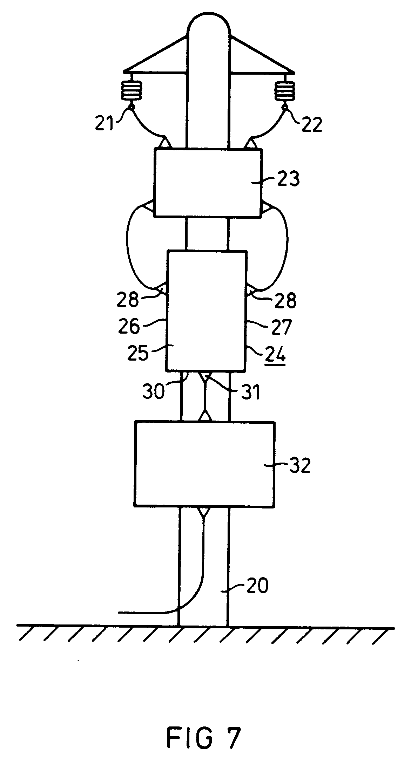

Anhand der Figuren 4, 5 und 6 sind sinngemäß die Einschaltstellung für die erste Speiseleitung, der Abschaltvorgang mit einer gerichteten Löschgasströmung am unteren Ende des Kontaktarmes 4 und wiederum die neutrale Ausschaltstellung dargestellt. Schraffiert ist jeweils in den Figuren 2 und 5 der Bereich des Gehäuses 2 hervorgehoben, in dem das Gas durch die Drehung des Kontaktarmes 4 mit dem Isolierkörper 10 verdichtet wird. Es sei noch erwähnt, daß in bekannter Weise der Umschalter mehrpolig ausgebildet sein kann, wobei mehrere der gezeigten Polbahnen axial hintereinander angeordnet sind.

Die Figur 7 zeigt schematisch die Ausbildung eines Umschalters der beschriebenen Art als Mastschalter. An einem Freileitungsmast 20 sind zwei speisende Mittelspannungsleitungen 21 und 22 isoliert abgestützt. Eine obere Gerätekombination 23 kann beispielsweise Strom- und Spannungswandler sowie Leistungsschalter enthalten. Unterhalb der Gerätekombination 23 ist in geeigneter Weise an dem Freileitungsmast 20 ein Schaltgerät 24 befestigt, das ein Gehäuse 25 besitzt, in dem sich ein Umschalter gemäß den Figuren 1 bis 6 befindet. An gegenüberliegenden Seitenwänden 26 und 27 befinden sich Durchführungen 28 zum Anschluß der beiden speisenden Leitungen. An der Unterseite 30 des Gehäuses 25 sind weitere Durchführungen 31 für einen Masttransformator 32 vorgesehen. Die Möglichkeit der Umschaltung des Transformators 32 von der Speiseleitung 21 zur Speiseleitung 22 oder umgekehrt verbessert die Versorgungssicherheit.

## Patentansprüche

1. Mehrstellungs-Drehschalter (1) zum Betrieb mit einem von Luft verschiedenen Löschgas mit einem drehbar gelagerten brückenartigen Kontaktarm (4 ) und einem isolierenden Gehäuse (2) zur Aufnahme des Kontaktarmes (4) und mit kontaktgebenden Enden (4a, 4b) des Kontaktarmes (4) zusammenwirkenden, entsprechend den vorgesehenen Schaltstellungen einander diametral gegenüberstehend angeordneten Paaren von feststehenden Kontaktstücken (5, 6, 7, 8), sowie mit einem jedes der kontaktgebenden Enden (4a, 4b) des Kontaktarmes (4) wenigstens seitlich abschirmenden Isolierkörper (10) zur Erzeugung einer gegen einen beim Schalten auftretenden Schaltlichtbogen gerichteten Strömung des Löschgases, **dadurch gekennzeichnet**, daß Schrägflächen (11) an den Enden des Isolierkörpers (10) gegensinnig derart angeordnet sind, daß je nach der Drehrichtung des Kontaktarmes (4) beim Schalten an dem einen (4a) oder an dem anderen kontaktgebenden Ende (4b) eine gegen den Schaltlichtbogen gerichtete Strömung (13) des Löschgases entsteht.

2. Mehrstellungs-Drehschalter nach Anspruch 1, **gekennzeichnet durch** die Ausbildung als Last-Umschalter mit einem Paar feststehender Kontaktstücke (5, 6) für die eine Schaltstellung und einem weiteren Paar von Kontaktstücken (7, 8) für die andere Schaltstellung, wobei erste benachbarte feststehende Kontaktstücke (5, 7) zur Bildung eines gemeinsamen lastseitigen Anschlusses miteinander verbunden und die verbleibenden feststehenden Kontaktstücke (6, 8) je einer wahlweise zuschaltbaren Speiseleitung zugeordnet sind.

3. Mehrstellungs-Drehschalter nach Anspruch 2, **gekennzeichnet durch** die Unterbringung in einem ein Löschgas, insbesondere Schwefelhexafluorid (SF₆), enthaltenden Gehäuse (25), das an gegenüberliegenden Seitenwänden (26, 27) Durchführungen (28) zum Anschluß von zwei speisenden Leitungen (21, 22) und an seiner Unterseite (30) weitere Durchführungen (31) zum Anschluß einer lastseitigen abgehenden Leitung besitzt und das mit einer Vorrichtung zur Anbringung an einem Freileitungsmast (20) versehen ist.

## Claims

1. Multi-position rotary switch (1) for operation with an extinguishing gas other than air, with a rotatably mounted bridge-type contact arm (4) and an insulating casing (2) to accommodate the contact arm (4) and with pairs of fixed contacts (5, 6, 7, 8) arranged diametrically opposed to correspond with the specified switch positions and with one each of the contacting ends (4a, 4b) screening the insulating element (10) at least to one side for the generation of a flow of extinguishing gas directed towards the switch arc occurring on switching, characterized in that oblique surfaces (11) are mounted on the ends of the contact arm in such a way that a flow of the extinguishing gas (13) directed against the switch arc occurring on switching, is generated at one (4a) or the other (4b) of the contacting ends depending on the direction of rotation of the contact arm (4).

2. Multi-position rotary switch according to claim 1 characterized in that it is designed as a load change-over switch with a pair of static contact elements (5, 6) for one of the on positions and a further pair of contact elements (7, 8) for the other switch position, with the first neighbouring static contact elements (5, 7) becoming connected to form a common, load-side connection and the remaining static contact elements (6, 8) each being assigned to an optionally selectable feed line.

3. Multi-position rotary switch according to claim 2 characterized in that it is accommodated in a casing (25) containing an extinguishing gas, preferably sulphur hexafluoride (SF₆), having passages (28) on its opposite side walls (26, 27) for the connection of two feed lines (21, 22) and further passages on its underside (30) for the connection of a load-side output line and being provided with a means of fastening it to an overhead-line pylon (20).

## Revendications

1. Commutateur rotatif à positions multiples (1) destiné à travailler avec un gaz d'extinction, qui est différent de l'air, et qui comporte un bras de contact (4) en forme d'étrier, qui est monté rotatif, et des couples de pièces de contact fixes (5,6,7,8), qui coopèrent avec des extrémités (4a,4b), qui établissent le contact, des bras de contact (4) et sont diamétralement opposés en fonction des positions de commutation prévues, ainsi qu'un corps isolant (10), qui protège au moins latéralement chacune des extrémités (4a,4b), qui établissent le contact, du bras de contact (4) et servent à produire un courant du gaz d'extinction, qui est dirigé en sens opposé d'un arc électrique apparaissant lors de la coupure, caractérisé par le fait que sur les extrémités du corps isolant (10) sont prévues des surfaces obliques (11) orientées dans des sens opposés de telle sorte qu'en fonction du sens de rotation du bras de contact (4) lors de la coupure, un courant (13) du gaz d'extinction, dirigé en sens opposé de l'arc électrique de coupure, apparaît au niveau d'une (4a) ou de l'autre (4b) des extrémités établissant le contact.

2. Commutateur rotatif à positions multiples suivant la revendication 1, caractérisé par son agencement sous la forme d'un commutateur de charge comportant un couple de pièces de contact fixes (5, 6) pour une position de commutation et un autre couple de pièces de contact (7,8) pour l'autre position de commutation, des premières pièces de contact fixes voisines (5,7) étant reliées entre elles pour former un raccord commun côté charge, tandis que les autres pièces de contact fixes (6,8) sont associées respectivement à une ligne d'alimentation pouvant être raccordée au choix.

3. Commutateur rotatif à positions multiples suivant la revendication 2, caractérisé par son installation dans un boîtier (25) qui contient un gaz d'extinction, notamment de l'hexafluorure de soufre (SF₆), et qui possède, sur des parois latérales opposées (26,27), des traversées (28) pour le raccordement de deux lignes d'alimentation (21,22) et, sur son côté inférieur (30), d'autres traversées (32) pour le raccordement d'une ligne de départ, côté charge, et qui est équipé d'un dispositif permettant son montage sur un pylône de ligne aérienne (20).
